# EUROPEAN PATENT APPLICATION

(11) **EP 3 053 773 A1**
(43) Date of publication of application: **10.08.2016**
(21) Application number: 15194773.6
(22) Date of filing: 16.11.2015
(51) Int. Cl.: B60L 11/18

(54) **SYSTEM, METHOD AND APPARATUS FOR REMOTE OPPORTUNITY CHARGING**

(30) Priority: 14.11.2014 US 201414541529
(71) Applicant: General Electric Company, Schenectady, NY 12345 (US)
(72) Inventor: KING, Robert Dean, Erie, PA 16531 (US); SALASOO, Lembit, Erie, PA 16531 (US)
(74) Representative: Illingworth-Law, William Illingworth

(57) **Abstract**

An embodiment of the present invention relates to a system (10). The system includes a vehicle (12) having primary energy storage device (24) for providing the vehicle (12) with a supply of electrical power, a remote opportunity charging device (14) configured to be removably connected to vehicle (12) and configured to selectively charge the primary energy storage device (24) of the vehicle during vehicle operation, and an interface (16) between the vehicle (12) and the remote opportunity charging device (14). The interface (16) is configured to enable the transfer of electrical power from the remote opportunity charging device (14) to the vehicle (12).

## Description

### FIELD OF THE INVENTION

Embodiments of the invention relate generally to vehicles. Other embodiments relate to a system, method and apparatus for the remote opportunity charging of vehicles.

### BACKGROUND OF THE INVENTION

In the underground mining industry, electric hauling vehicles are utilized to move material from a loading or extraction point, where the material is extracted from the wall of the mine, to an unloading or tipping point, where the material is unloaded for removal from the mine via extraction shafts. These electric hauling vehicles may be powered by one or more on-board batteries that must be periodically recharged or swapped out for fresh batteries.

When battery recharging/swapping is necessary, hauling vehicles operating within the mine are typically required to be driven to a special charging station located off of the normal haul route where the vehicle may be connected to the charging station for recharging or a fresh battery installed. As will be readily appreciated, however, removing the vehicles from the normal haul route for charging reduces productivity due to the extra time required for travel to and from charging station. In addition, during the battery charging/swapping process, the vehicle is not powered and cannot be moved; it is essentially taken out of service for a period of time, reducing productivity.

Moreover, with existing charging stations, the power electronics of the charging station must be rated to supply the maximum charge power which may increase charging station cost, size, weight, and/or limit the level of charge power. Accordingly, existing battery charging stations are often designed for specific batteries and therefore may not have the flexibility to charge a range of batteries and energy storage units utilized in mining operations.

In view of the above, there is a need for a system and method for recharging the batteries of electric vehicles that substantially reduces or obviates the need to remove such vehicles from service for recharging.

### BRIEF DESCRIPTION OF THE INVENTION

An embodiment of the present invention relates to a system. The system includes a vehicle having primary energy storage device for providing the vehicle with a supply of electrical power, a remote opportunity charging device configured to be removably connected to the vehicle and configured to selectively charge the primary energy storage device of the vehicle during vehicle operation, and an interface between the vehicle and the remote opportunity charging device. The interface is configured to enable the transfer of electrical power from the remote opportunity charging device to the vehicle.

According to another embodiment of the present invention, an apparatus is provided. The apparatus includes a housing, a control unit within the housing and configured to establish a communication link with a vehicle, and an auxiliary energy storage device within the housing. The auxiliary energy storage device is configured to selectively transfer electrical power to a primary energy storage device on-board the vehicle during operation of the vehicle to charge the primary energy storage device. The apparatus is configured for removable attachment to the vehicle.

According to another embodiment of the present invention, a method is provided. The method includes the steps of removably connecting a remote opportunity charging device to a vehicle, establishing a communication link between the remote opportunity charging device and the vehicle, and selectively transferring electrical power from an auxiliary energy storage device of the remote opportunity charging device to a primary energy storage device on-board the vehicle.

### BRIEF DESCRIPTION OF THE DRAWINGS

The present invention will be better understood from reading the following description of non-limiting embodiments, with reference to the attached drawings, wherein below:
FIG. 1 is a schematic view of a system for the remote opportunity charging of a vehicle, according to an embodiment of the present invention.
FIG. 2 is circuit diagram of the system of FIG. 1, according to an embodiment of the present invention.
FIG. 3 is a circuit diagram of a system for the remote opportunity charging of a vehicle, according to another embodiment of the present invention.
FIG. 4 is a circuit diagram for a charging station for recharging a remote opportunity charging device, according to an embodiment of the present invention.

### DETAILED DESCRIPTION OF THE INVENTION

Reference will be made below in detail to exemplary embodiments of the invention, examples of which are illustrated in the accompanying drawings. Wherever possible, the same reference numerals used throughout the drawings refer to the same or like parts. Although exemplary embodiments of the present invention are described with respect to mining machinery and equipment and, in particular, to mine hauling vehicles, embodiments of the invention may also be applicable for use with electric vehicles and machinery generally. In particular, while the remote opportunity charging device of the present invention is described herein in connection with a mining scoop, the remote opportunity charging device may be utilized with any type of transport vehicle or machinery having at least one of electric propulsion and electrically driven auxiliaries.

As used herein, "electrical contact," "electrical communication" and "electrically coupled" means that the referenced elements are directly or indirectly connected such that an electrical current may flow from one to the other. The connection may include a direct conductive connection (i.e., without an intervening capacitive, inductive or active element), an inductive connection, a capacitive connection, and/or any other suitable electrical connection. Intervening components may be present. As used herein, "selectively coupled" means that a component may be coupled to another component in one mode of operation, and decoupled with the another component in another mode of operation. As used herein, "removably connected," "removably connected" and "removably attached" means the ability to disconnect one component from another component. As used herein, "interface" refers to an area or component(s) where two systems or devices meet and interact such that the two systems are electrically coupled to one another. As used herein, "controller" a process or computer component adapted to control another component or system to achieve certain desired goals and objectives.

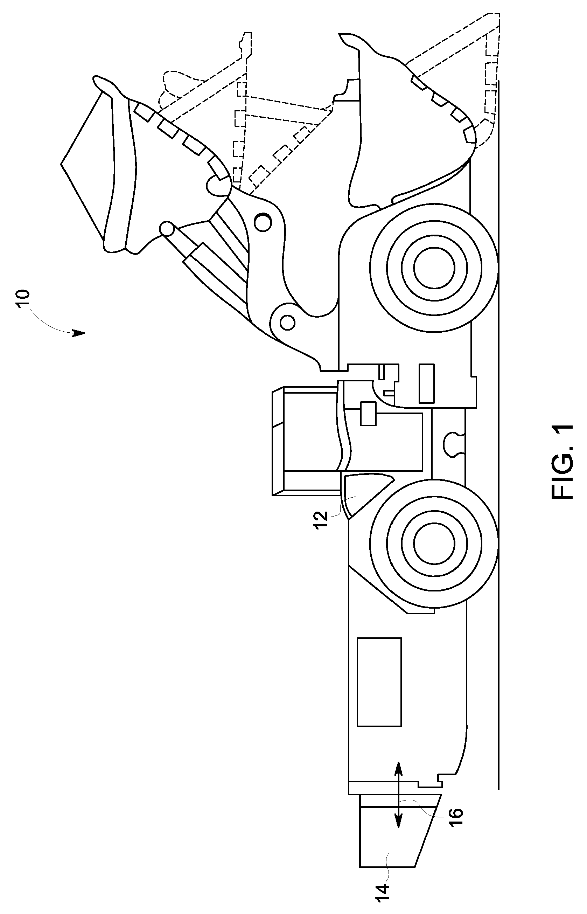

With reference to FIG. 1, a system 10 for the remote opportunity charging of a vehicle is illustrated. The system 10 includes an electric vehicle, depicted therein as electric mining scoop 12, and a remote opportunity charging device 14 removably connected to the electric vehicle 12 via an interface 16. In an embodiment, the remote opportunity charging device 14 is removable from the vehicle 12 and is configured for selective electrical coupling to a charging station so that the remote opportunity charging device 14 may be recharged, as discussed in detail below. As used herein, "remote opportunity charging device" refers to a device that transfers electrical energy to another device to which it is connected without itself receiving a supply of electrical power during the transfer (e.g., during transfer of electrical energy to the another device, the remote opportunity charging device does not receive electrical power from a utility electrical grid, off-board generator, or the like).

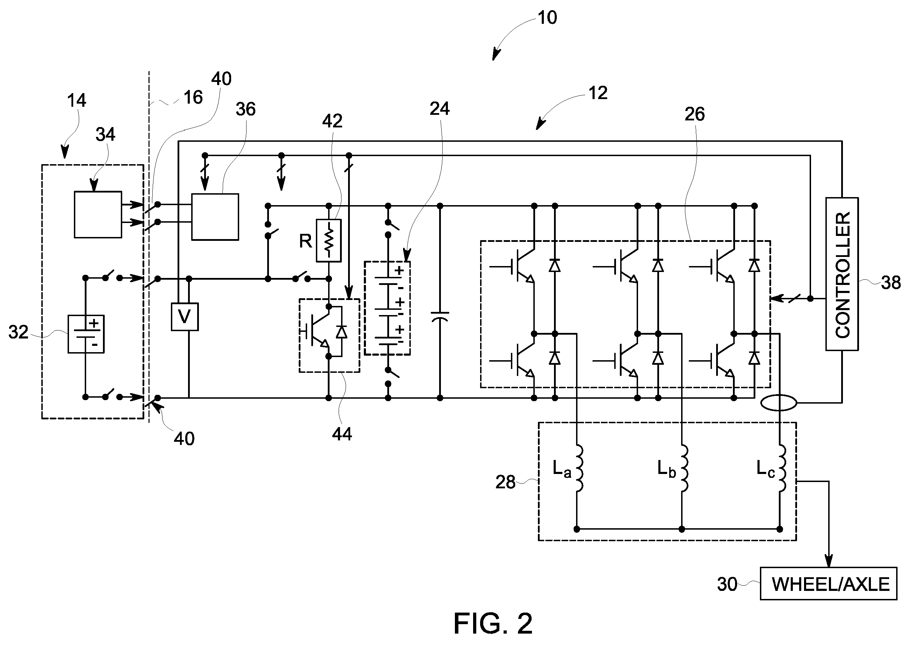

Referring now to FIG. 2, a circuit diagram illustrating the internal components of the system for remote opportunity charging 10 (including vehicle 12, the remote opportunity charging device 14 and interface 16) is shown. In an embodiment, the vehicle 12 may include an electric propulsion system of the type generally known in the art that utilizes traction motors to propel the vehicle. In particular, as illustrated in FIG. 2, the electric propulsion system may include an on-board energy storage unit, such as a primary propulsion battery 24 and/or ultracapacitor, that stores electrical energy. Electrical energy from the battery 24 is fed to an inverter 26 where direct current (DC) is converted to alternating current (AC). The alternating current is then fed to multi-phase (typically 3-phase) AC traction motors 28 that drive the wheels or axle 30 of the vehicle 12. As used herein, "primary energy storage device" or "primary propulsion battery" means an energy storage unit that supplies electrical energy to the vehicle to be used for propulsion for moving the vehicle.

As illustrated in FIG. 2, the remote opportunity charging device 14 includes a housing containing an auxiliary energy storage device, such as an auxiliary battery 32, configured to supply electrical power to the vehicle 12, as discussed hereinafter, and an opportunity charging device communication and control unit 34 configured to communicate with a corresponding communication unit 36 on-board the vehicle 12. The communication unit 36 of the vehicle is electrically connected to vehicle controller 38, which functions to control the flow of electrical power to traction motor(s) 28 of the vehicle 12, as discussed in detail hereinafter. As used herein, "auxiliary energy storage device" means an energy storage unit that is configured to provide supplemental power to the vehicle or to the primary energy storage device. As used herein, "supplemental power" means power other than the power provided by a primary energy storage device.

As further shown in FIG. 2, in an embodiment, the interface 16 between the vehicle 12 and the remote opportunity charging device 14 may be provided by a plurality of spring-loaded slide contacts 40 present on the rear of the vehicle 12. When the remote opportunity charging device 14 is connected to the vehicle 12, the contacts 40 establish an electrical connection between the charging device communication and control unit 34 and the communication unit 36 of the vehicle 12 so as to facilitate communication between the opportunity charging device 14 and the vehicle 12.

This communication link allows for a "handshake" to occur between the opportunity charging device 14 and the vehicle 12 when they are physically connected and, in particular, allows for the exchange of information relating to battery parameters between the remote opportunity charging device and the vehicle 12. In an embodiment, the battery parameters may include battery type, battery chemistry, battery charge profile, state of charge and the like. As will be readily appreciated, this information may then be utilized by the communication and control unit 34 of the remote opportunity charging device 14 and/or the controller 38 of the vehicle to ensure that power from the battery 32 is provided to the vehicle 12 in a safe manner. As used herein, the phrase "communication link" may refer to any connection, wire, port, device, and/or signal and/or any transmission, exchange, repeating, and/or other flow of information or data that is processed by an entity, and/or that is shared or exchanged between two or more people, devices, and/or other entities.

In addition to establishing a communication link between the vehicle 12 and the remote opportunity charging device 14, the contacts 40 also establish an electrical connection between the auxiliary battery 32 of the opportunity charging device 14 and the battery 24 on-board the vehicle 12, as illustrated, which facilitates the flow of electrical power from the auxiliary battery 32 to the primary propulsion battery 24 of the vehicle 12 to recharge the same.

In an embodiment, the nominal voltage of the auxiliary battery 32 is within a threshold voltage of the primary propulsion battery 24 on-board the vehicle 12. In an embodiment, "nominal voltage" means the rated or named value, stating the available, input, or output voltage of the an energy storage device. A power resistor 42 and associated switches (contactors or electronic) may be utilized to limit the in-rush current during an initial energizing routine when the opportunity charging device 14 is first connected to the vehicle 12. In an embodiment, the power resistor 42 may also be a vehicle dynamic brake resistor, which may be utilized in connection with a pulse-width-modulation chopper 44.

In embodiments of the present invention, the primary battery 24 of the vehicle has a capacity within the range of approximately 5kWh to approximately 50kWh and the auxiliary battery 32 of the remote opportunity charging device 14 has a capacity within the range of approximately 2.5kWh to approximately 25kWh. In an embodiment, the capacity of the primary battery 24 is approximately 10kWh and the capacity of the auxiliary battery 32 of the remote opportunity charging device is approximately 5kWh.

In use, as the vehicle 12 is operated within a mine, the primary propulsion battery 24 on-board the vehicle 12 provides power to the traction motors 28 to propel the vehicle 12, and to other systems and devices that require power (e.g., a hydraulic system for operating various implements), as needed. The capacity of the battery 24 to provide electrical energy for vehicle operations, however, is not unlimited; the primary propulsion battery 24 must be recharged periodically in order to continue operations. It is often undesirable, however, to remove the vehicle 12 from its operations in order to charge the battery 24, as this results in a loss of productivity. For example, it may be particularly undesirable to remove a vehicle from its haul route and to drive the vehicle to a charging station at a remote location for recharging or battery swap.

The system 10 of the present invention obviates the need to take an electric vehicle out of service for periodic charging or battery swap. In particular, another vehicle may be utilized to transport the remote opportunity charging device 14 of the present invention to the location of the vehicle 12, and to removably connect the charging device 14 to the vehicle 12. In an embodiment, the charging device 14 is attached to the rear of the vehicle 12 via the spring-loaded sliding electrical contacts 40 to establish the interface 16. In particular, the remote opportunity charging device 14 may be removably attached to an external surface (e.g., rear end surface) of the vehicle 12. In an embodiment, the interface 16 includes a vehicle portion on the external surface thereof and a mating device portion, such that the device can be removably attached to the external surface of the vehicle. In an embodiment, removable attachment of the device 14 to the vehicle is facilitated by the inclusion of a retention mechanism for securing the housing of the device 14 to the vehicle 12.

Once a 'handshake' or a communications link is established between the charging device communication and control unit 34 and the communication unit 36 of the vehicle 12, information is passed over the communication link identifying the battery parameters (i.e., battery type, chemistry, charge profile, state of charge etc.) of the primary propulsion battery 24 on-board the vehicle 12 and identifying the battery parameters of the auxiliary battery 32 of the remote opportunity charging device 14. The controller 38 of the vehicle 12 is configured to then control the flow of electrical energy from the auxiliary battery 32 of the opportunity charging device 14 to the primary propulsion battery 24 of the vehicle 12 to recharge the same and/or to provide supplemental power for electrically-driven auxiliary devices of the vehicle. As used herein, "auxiliary device" means an electrically driven device of the vehicle other than devices and components utilized for propulsion." For example, the auxiliary battery 32 may be utilized to provide supplemental power to a hydraulic system of the vehicle, which may be utilized to operate various hydraulic implements, or to monitoring and display systems of the vehicle.

As will be readily appreciated, the communication link between the remote opportunity charging device 14 and the vehicle 12 allows for a mix of battery technologies to be utilized, thereby providing for a flexible design that may optimize energy storage for a given route or application. For example, it is not necessary that the battery technology and chemistry of the primary propulsion battery 24 be the same as the battery technology and chemistry of the auxiliary battery 32 in the remote opportunity charging device 14. This is because the respective control units of the vehicle 12 and the remote opportunity charging device 14 are capable of determining the parameters of the batteries within the system, and tailoring the flow of electricity from the remote opportunity charging device 14 to the vehicle 12 in dependence upon the specific need for the electricity and/or make-up of the primary propulsion battery 24 on-board the vehicle 12.

The remote opportunity charging device 14 is therefore configured to selectively recharge the primary propulsion battery 24 during normal operation of the vehicle (and without pausing operation), as well as to provide supplemental electrical energy and power during operation, as needed. In particular, the remote opportunity charging device 14 may be utilized to provide supplemental power over certain missions that may require additional electrical energy to complete a required task or maneuver. As will be readily appreciated, the ability to supplement power provided by the primary propulsion battery 24 and to recharge the battery 24 during normal operation (i.e., without taking the vehicle out of service) allows the primary battery 24 to be downsized, i.e., it allows the use of a primary battery 24 that is of a reduced size, weight and cost as compared to those currently used in electric mining vehicles.

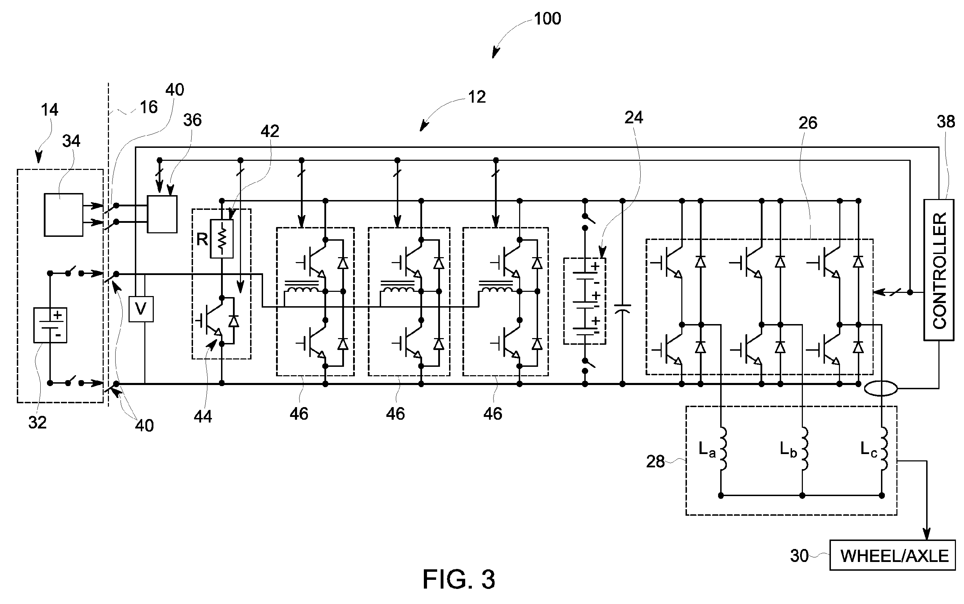

Turning now to FIG. 3, a circuit diagram illustrating the internal components of a system for remote opportunity charging 100 according to another embodiment of the present invention is shown. As shown therein, the system is generally similar to the system 10 described above in connection with FIG. 2, where like reference numerals designate like parts. In this configuration, however, one or more one bi-directional DC-DC boost converters 46 are used to control the flow of power from the auxiliary battery 32 of the remote opportunity charging device 14 to the primary propulsion battery 24 of the electric vehicle traction drive in either charging or driving mode. As with the embodiment of FIG. 2, an optional dynamic brake resistor 42 and associated chopper 44 may be used in the propulsion system as an optional dynamic brake system to limit DC link voltage during significant regenerative braking events, however the power resistor 42 is not needed to limit inrush current as in the embodiment of FIG. 2. In an embodiment, system 10, therefore, has an improved capability to capture and store regenerative energy pulses, thus reducing the energy cost to recharge the on-board energy storage unit 24.

While the remote opportunity charging device 14 illustrated in FIG. 3 is shown as utilizing a battery 32 to provide electrical power to recharge the battery 24 on-board the vehicle 12, in an embodiment, other energy storage devices may be utilized. In particular, in an embodiment, battery 32 may be replaced by a high specific power ultracapacitor. In such embodiment, one or more bi-directional DC-DC boost converters 46 are used to interface the ultracapacitor (DC charge source) of the remote opportunity charging device 14 with the electric propulsion drive system of the vehicle 12 and the primary propulsion battery 24 thereof.

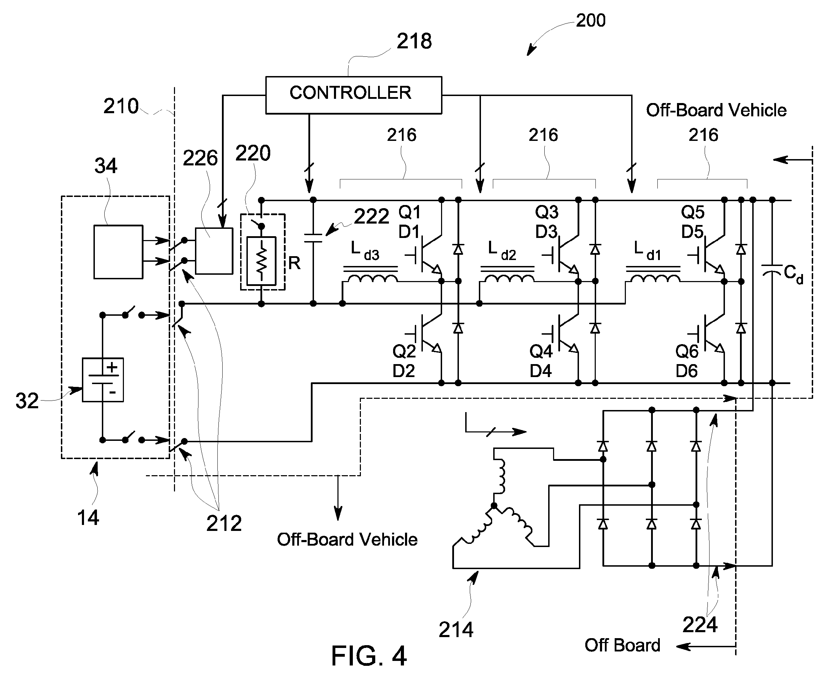

As alluded to above, the battery 32 or ultracapacitor of the remote opportunity charging device 14, after it is utilized to recharge and/or supplement the primary propulsion battery 24 of a vehicle 12, may be disconnected from the vehicle and electrically coupled with a charging station so that the battery 32 or ultracapacitor may be recharged and the remote opportunity charging device 14 may be reused. FIG. 4 illustrates a charging station 200 for recharging the remote opportunity charging device 14. Similar to the vehicle interface 16 as described above, coupling of the remote opportunity charging device 14 to the charging station 200 to form an interface 210 is provided through spring loaded sliding electrical contacts 212 provided on the charging station 200, similar to the mating contacts 40 on electric vehicle 12 as described in FIGS. 2 and 3. High power rapid charging of the auxiliary energy storage source (battery 32 or ultracapacitor) of the remote opportunity charging device 14 is provided by a high impedance transformer 214 (shown as 3-phase, but other number of phases, i.e. 6, could also be utilized) with 3-phase diode rectification. In an embodiment, a 12-pulse rectifier may be utilized. In an embodiment, rapid charging during the second portion of the charge is limited by the high impedance transformer 214. The final portion of the charge requires critical voltage level and is controlled by one or more bi-directional DC-DC converters 216 and a controller 218.

In an embodiment, initial inrush current may limited by an optional power resistor 220. As also illustrated therein, the charging station 200 may also include a bypass contactor 222 to increase current capability. In particular, the bypass contactor 222 allows the current to be higher than the bi-directional converter capability. In operation, when the battery voltage reaches a maximum, the contactor 222 opens and current is controlled by the bi-directional converters 216. Power may be supplied to the charging station 200 by electrical cables 224 from a distribution transformer (not shown) that forms a part of the mine power distribution network. As will be readily appreciated, the high-impedance transformer 214 allows for the use of a flexible cable between the distribution transformer and the charging station 200 even with additional inductance resulting from long cables.

As shown therein, the flexible cable 224 may be a multi-phase (e.g., three phase) AC cable between the distribution transformer (not shown) and the primary winding of the high impedance transformer 214 (the secondary winding is illustrated in FIG. 4) within the charging station 200. This allows the charging station 200 to be portable and to be quickly and easily moved to almost any location within a mine, and the additional inductance of the AC cable will not adversely affect charging.

As with the vehicle 12, the charging station 200 may also include a communication unit 226 electrically connected to the controller 218 and which is configured to establish a communication link with the remote opportunity charging device 14 via the electrical contacts 212. Once the communications link is established between the communications and control unit 34 of the charging device 14 and communications unit 226 of the charging station 200, information relating to the type of energy storage unit present in the charging device 34 may be communicated to the charging station 200. In particular, information relating to battery type (e.g. battery or ultracapacitor), chemistry, charge profile, state of charge, etc.) may be communicated to the controller 218 of the charging station 218. The controller 218 may then charge the energy storage unit within the charging device 14 according to its particular charge profile in a safe, efficient and rapid manner.

As will be readily appreciated, therefore, the charging station 200 of the present invention does not require that the charging station to be designed for a specific battery. Indeed, the charging station 200 is capable of recognizing the type of energy storage unit connected to the station 200 and creating and executing a tailored charge routine specific to the energy storage unit to be recharged. In this respect, the charging station 200 has the flexibility to charge either batteries (having various chemistries) and/or ultracapacitor energy storage units. As the power electronics of the charging station is not required to be rated to supply the maximum charge power, charging station size, cost and weight may be substantially reduced.

Indeed, the charging station 200 is a low cost, portable charging station capable of performing a rapid charge of the auxiliary energy storage unit housed in the remote opportunity charging device, which may also be utilized to provide opportunity charging of a vehicle when a vehicle is parked or being loaded.

As discussed above, the remote opportunity charging device 14 of the present invention, once charged by charging station 200, may be removably attached, mounted and electrically coupled to a material transport vehicle's on-board energy storage unit when additional power or energy is required to complete a mission, or when the primary on-board energy storage unit needs to be recharged. In particular, the remote opportunity charging device 14 is able to provide supplemental power to meet peak power demands and/or perform a partial recharge of the primary energy storage unit of a vehicle while the vehicle is operating at relatively low power levels.

Moreover, by utilizing the remote opportunity charging device of the present invention, productivity is increased by eliminating the need to return to a designated charging location prior to the end of a normal shift or maneuver for charging or for a swap of the primary propulsion energy storage unit.

While the remote opportunity charging device of the present invention is described herein in connection with a mining scoop, the remote opportunity charging device may be utilized with any type of transport vehicle or machinery having at least one of electric propulsion and electrically driven auxiliaries. For example, it is envisioned that the remote opportunity charging device described herein may be utilized for providing auxiliary power in mining and utility applications and to conveyors, drills, haulers and crushers.

An embodiment of the present invention relates to a system. The system includes a vehicle having primary energy storage device for providing the vehicle with a supply of electrical power, a remote opportunity charging device configured to be removably connected to vehicle and configured to selectively charge the primary energy storage device of the vehicle during vehicle operation, and an interface between the vehicle and the remote opportunity charging device. The interface is configured to enable the transfer of electrical power from the remote opportunity charging device to the vehicle.

In an embodiment, the interface is configured to provide a communication link between the remote opportunity charging device and the vehicle and is configured to allow the communication of energy storage device parameters between the vehicle and the remote opportunity charging device.

In an embodiment, the remote opportunity charging device includes an auxiliary energy storage device for charging the primary energy storage device of the vehicle. In an embodiment, the energy storage device parameters include at least one of an energy storage device type, chemistry, charge profile and state of charge for at least one of the primary energy storage device and the auxiliary energy storage device.

In an embodiment, the system may include a controller configured to control the flow of electricity to the vehicle in dependence upon the energy storage device parameters for the auxiliary energy storage device and the primary energy storage device.

In an embodiment, the auxiliary energy storage device is a battery. In an embodiment, the auxiliary energy storage device is an ultracapacitor.

In an embodiment, the remote opportunity charging device may be configured to provide supplemental power to an auxiliary device of the vehicle.

In an embodiment, the interface is a plurality of spring-loaded, sliding electrical contacts.

In an embodiment, the system includes at least one bi-directional DC-DC boost converter that is configured to control the flow of electrical power from the auxiliary energy storage device to the primary energy storage device.

In an embodiment, a nominal voltage of the auxiliary energy storage device is within a threshold voltage of the primary energy storage device.

In an embodiment, the remote opportunity charging device includes a housing and an auxiliary energy storage device in the housing for charging the primary energy storage device of the vehicle, wherein the remote opportunity charging device is configured to move along with the vehicle during vehicle operation and to charge the primary energy storage device of the vehicle without the remote opportunity charging device being tethered to off-board the vehicle. The interface is configured to provide a communication link between the remote opportunity charging device and the vehicle and is configured for the communication of energy storage device parameters between the vehicle and the remote opportunity charging device, the energy storage device parameters relating to at least one of the auxiliary energy storage device or the primary energy storage device. The system may also comprise a controller configured to control the charging of the primary energy storage device by the remote opportunity charging device in dependence upon the energy storage device parameters.

According to another embodiment of the present invention, an apparatus is provided. The apparatus includes a housing, a control unit within the housing and configured to establish a communication link with a vehicle, and an auxiliary energy storage device within the housing. The auxiliary energy storage device is configured to selectively transfer electrical power to a primary energy storage device on-board the vehicle during operation of the vehicle to charge the primary energy storage device. The apparatus is configured for removable attachment to the vehicle.

In an embodiment, the apparatus is configured to interface with the vehicle for the transfer of the electrical power though an array of spring-loaded, sliding electrical contacts..

In an embodiment, the communication link is established through at least one of the spring-loaded, sliding electrical contacts of the array of electrical contacts and is configured to allow the communication of energy storage device parameters between the vehicle and the apparatus.

In an embodiment, the energy storage device parameters may include at least one of an energy storage device type, chemistry, charge profile and state of charge for at least one of the primary energy storage device and the auxiliary energy storage device.

In an embodiment, the auxiliary energy storage device may be a battery. In an embodiment, the auxiliary energy storage device may be an ultracapacitor.

In an embodiment, the auxiliary energy storage device is configured to provide supplemental power to an auxiliary device of the vehicle.

In an embodiment, a nominal voltage of the auxiliary energy storage device is within a threshold voltage of the primary energy storage device of the vehicle.

According to another embodiment of the present invention, a method is provided. The method includes the steps of removably connecting a remote opportunity charging device to a vehicle, establishing a communication link between the remote opportunity charging device and the vehicle, and selectively transferring electrical power from an auxiliary energy storage device of the remote opportunity charging device to a primary energy storage device on-board the vehicle.

In an embodiment, the method also includes the step of, over the communication link, communicating at least one parameter of the auxiliary energy storage device to the vehicle, the at least one parameter including at least one of a type, chemistry, charge profile, or a state of charge of the auxiliary energy storage device.

In an embodiment, the at least one parameter includes at least one of a type, chemistry, charge profile and state of charge of the auxiliary energy storage device.

In an embodiment, the electrical power is transferred from the auxiliary energy storage device to the primary energy storage device in dependence upon the at least one parameter.

In an embodiment, the auxiliary energy storage device may be a battery. In an embodiment, the auxiliary energy storage device may be an ultracapacitor.

In an embodiment, the method may also include the step of selectively transferring the electrical power from the auxiliary energy storage device of the remote opportunity charging device to an auxiliary device of the vehicle.

In an embodiment, the step of removably connecting the remote opportunity charging device includes establishing an electrical connection between the auxiliary energy storage device and the primary energy storage device.

In an embodiment, the electrical connection is provided by a plurality of spring-loaded, sliding electrical contacts.

According to yet another embodiment, a charging station for a remote opportunity charging device is provided. The charging station includes an interface for releasably receiving the remote opportunity charging device and for establishing an electrical connection between the charging station and the remote opportunity charging device, a communication unit configured to establish a communications link with the remote opportunity charging device, and a controller configured to control the distribution of electrical energy to the remote opportunity charging device in dependence upon to at least one charge parameter of the remote opportunity charging device. In an embodiment, the remote opportunity charging device includes an energy storage unit. In an embodiment, the energy storage unit may be a battery. In an embodiment, the energy storage unit may be an ultracapacitor. In an embodiment, the at least one charge parameter includes at least one of a device type, chemistry, charge profile and state of charge of the energy storage unit. The interface may be provided by a plurality of spring-loaded, sliding electrical contacts. The charging station may include a high impedance transformer with a 3-phase diode rectifier configured to provide a high power, rapid charge of the energy storage unit of the remote opportunity charging device. In an embodiment, the charging station includes at least one DC-DC converter configured to control voltage during charging.

In an embodiment, a system comprises a vehicle (e.g., electric vehicle) having a primary energy storage device for providing the vehicle with a supply of electrical power, a remote opportunity charging device configured to be removably connected to vehicle and to selectively charge the primary energy storage device of the vehicle during vehicle operation, and an interface between the vehicle and the remote opportunity charging device. The interface is configured to enable the transfer of electrical power from the remote opportunity charging device to the vehicle. The remote opportunity charging device includes a housing and an auxiliary energy storage device in the housing for charging the primary energy storage device of the vehicle. The remote opportunity charging device is configured to move along with the vehicle during vehicle operation and to charge the primary energy storage device of the vehicle without the remote opportunity charging device being tethered to off-board the vehicle (e.g., when the remote opportunity charging device is attached to the vehicle, there are no physical electrical connections between the remote opportunity charging device and any items/devices off-board the vehicle). The interface is configured to provide a communication link between the remote opportunity charging device and the vehicle, the communication link being configured for the communication of energy storage device parameters between the vehicle and the remote opportunity charging device. The energy storage device parameters relate to at least one of the auxiliary energy storage device or the primary energy storage device. The system further comprises a controller (e.g., part of the vehicle, part of the charging device, or part of the interface) configured to control the charging of the primary energy storage device by the remote opportunity charging device in dependence upon the energy storage device parameters.

In an embodiment, an apparatus (e.g., remote opportunity charging device) includes a housing, a control unit within the housing, and an auxiliary energy storage device within the housing. The apparatus is configured for removable attachment to a vehicle having a primary energy storage device onboard the vehicle. The control unit is configured to establish a communication link with the vehicle. The control unit is also configured to control the auxiliary energy storage device to selectively transfer electrical power to the primary energy storage device onboard the vehicle during operation of the vehicle, to charge the primary energy storage device. The apparatus is configured so that the power transfer (from the auxiliary energy storage device of the apparatus to the primary energy storage device of the vehicle) occurs when the apparatus is attached to the vehicle and without tethering of the apparatus to anything off-board the vehicle. The apparatus is further configured to be removably attached to a charging station off-board the vehicle, with the charging station being configured to charge the auxiliary energy storage device of the apparatus. Thus, when the apparatus is charged, it may be decoupled from the charging station, attached to the vehicle, the vehicle moves or otherwise operates without encumbrance of any physical connection between the apparatus and off-board the vehicle, and power is transferred from the auxiliary energy storage device to the primary energy storage device of the vehicle.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the invention without departing from its scope. While the dimensions and types of materials described herein are intended to define the parameters of the invention, they are by no means limiting and are exemplary embodiments. Many other embodiments will be apparent to those of skill in the art upon reviewing the above description. The terms "including" and "in which" are used as the plain-English equivalents of the respective terms "comprising" and "wherein." Moreover, the terms "first," "second," "third," "upper," "lower," "bottom," "top," etc. are used merely as labels, and are not intended to impose numerical or positional requirements on their objects.

This written description uses examples to disclose several embodiments of the invention, including the best mode, and also to enable one of ordinary skill in the art to practice the embodiments of invention, including making and using any devices or systems and performing any incorporated methods.

As used herein, an element or step recited in the singular and proceeded with the word "a" or "an" should be understood as not excluding plural of the elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising," "including," or "having" an element or a plurality of elements having a particular property may include additional such elements not having that property.

Since certain changes may be made in the embodiments described herein without departing from the spirit and scope of the invention herein involved, it is intended that all of the subject matter of the above description or shown in the accompanying drawings shall be interpreted merely as examples illustrating the inventive concept herein and shall not be construed as limiting the invention.

Various aspects and embodiments of the present invention as defined in the following numbered clauses:
1. A system, comprising:
   a vehicle having a primary energy storage device for providing the vehicle with a supply of electrical power;
   a remote opportunity charging device configured to be removably connected to the vehicle and to selectively charge the primary energy storage device of the vehicle during vehicle operation; and
   an interface between the vehicle and the remote opportunity charging device, the interface being configured to enable the transfer of electrical power from the remote opportunity charging device to the vehicle.
2. The system of clause 1, wherein:
   the interface is configured to provide a communication link between the remote opportunity charging device and the vehicle, the communication link being configured to allow the communication of energy storage device parameters between the vehicle and the remote opportunity charging device.
3. The system of clause 1 or clause 2, wherein:
   the remote opportunity charging device includes an auxiliary energy storage device for charging the primary energy storage device of the vehicle; and
   wherein the energy storage device parameters include at least one of an energy storage device type, chemistry, charge profile, or state of charge for at least one of the primary energy storage device or the auxiliary energy storage device.
4. The system of any preceding clause, further comprising:
   a controller configured to control the flow of electricity to the vehicle in dependence upon the energy storage device parameters for the auxiliary energy storage device and the primary energy storage device.
5. The system of any preceding clause, further comprising:
   at least one bi-directional DC-DC boost converter that is configured to control the flow of electrical power from the auxiliary energy storage device to the primary energy storage device.
6. The system of any preceding clause, wherein:
   a nominal voltage of the auxiliary energy storage device is within a threshold voltage of the primary energy storage device.
7. The system of any preceding clause, wherein:
   the remote opportunity charging device is configured to provide supplemental power to an auxiliary device of the vehicle.
8. The system of any preceding clause, wherein:
   the interface comprises a plurality of spring-loaded, sliding electrical contacts.
9. The system of any preceding clause, wherein:
   the remote opportunity charging device includes a housing and an auxiliary energy storage device in the housing for charging the primary energy storage device of the vehicle, wherein the remote opportunity charging device is configured to move along with the vehicle during vehicle operation and to charge the primary energy storage device of the vehicle without the remote opportunity charging device being tethered to off-board the vehicle;
   the interface is configured to provide a communication link between the remote opportunity charging device and the vehicle, the communication link being configured for the communication of energy storage device parameters between the vehicle and the remote opportunity charging device, the energy storage device parameters relating to at least one of the auxiliary energy storage device or the primary energy storage device; and
   the system further comprises a controller configured to control the charging of the primary energy storage device by the remote opportunity charging device in dependence upon the energy storage device parameters.
10. An apparatus, comprising:
   a housing;
   a control unit within the housing, the control unit being configured to establish a communication link with a vehicle; and
   an auxiliary energy storage device within the housing, the auxiliary energy storage device being configured to selectively transfer electrical power to a primary energy storage device on-board the vehicle during operation of the vehicle to charge the primary energy storage device;
   wherein the apparatus is configured for removable attachment to the vehicle.
11. The apparatus of any preceding clause, wherein:
   the apparatus is configured to interface with the vehicle for the transfer of the electrical power though an array of spring-loaded, sliding electrical contacts.
12. The apparatus of any preceding clause, wherein:
   the communication link is established through at least one of the spring-loaded, sliding electrical contacts of the array of electrical contacts and is configured to allow the communication of energy storage device parameters between the vehicle and the apparatus.
13. The apparatus of any preceding clause, wherein:
   the energy storage device parameters include at least one of an energy storage device type, chemistry, charge profile, or state of charge for at least one of the primary energy storage device or the auxiliary energy storage device.
14. The apparatus of any preceding clause, wherein:
   the auxiliary energy storage device is configured to provide supplemental power to an auxiliary device of the vehicle.
15. The apparatus of any preceding clause, wherein:
   a nominal voltage of the auxiliary energy storage device is within a threshold voltage of the primary energy storage device of the vehicle.
16. A method, comprising the steps of:
   removably connecting a remote opportunity charging device to a vehicle;
   establishing a communication link between the remote opportunity charging device and the vehicle; and
   selectively transferring electrical power from an auxiliary energy storage device of the remote opportunity charging device to a primary energy storage device on-board the vehicle.
17. The method according to any preceding clause, further comprising the step of:
   over the communication link, communicating at least one parameter of the auxiliary energy storage device to the vehicle, the at least one parameter including at least one of a type, chemistry, charge profile, or a state of charge of the auxiliary energy storage device.
18. The method according to any preceding clause, wherein:
   the electrical power is transferred from the auxiliary energy storage device to the primary energy storage device in dependence upon the at least one parameter.
19. The method according to any preceding clause, further comprising the step of:
   selectively transferring the electrical power from the auxiliary energy storage device of the remote opportunity charging device to an auxiliary device of the vehicle.
20. The method according to any preceding clause, wherein:
   the step of removably connecting the remote opportunity charging device includes establishing an electrical connection between the auxiliary energy storage device and the primary energy storage device, wherein the electrical connection is provided by a plurality of spring-loaded, sliding electrical contacts.

## Claims

1. A system (10), comprising:
a vehicle (12) having a primary energy storage device (24) for providing the vehicle (12) with a supply of electrical power;
a remote opportunity charging device (14) configured to be removably connected to the vehicle (12) and to selectively charge the primary energy storage device (24) of the vehicle (12) during vehicle operation; and
an interface (16) between the vehicle (12) and the remote opportunity charging device (14), the interface (16) being configured to enable the transfer of electrical power from the remote opportunity charging device (14) to the vehicle (12).

2. The system (10) of claim 1, wherein:
the interface (16) is configured to provide a communication link between the remote opportunity charging device (14) and the vehicle (12), the communication link being configured to allow the communication of energy storage device parameters between the vehicle (12) and the remote opportunity charging device (14).

3. The system (10) of claim 1 or claim 2, wherein:
the remote opportunity charging device (14) includes an auxiliary energy storage device (32) for charging the primary energy storage device (24) of the vehicle (12); and
wherein the energy storage device parameters include at least one of an energy storage device type, chemistry, charge profile, or state of charge for at least one of the primary energy storage device (24) or the auxiliary energy storage device (32).

4. The system (10) of any preceding claim, further comprising:
a controller (38) configured to control the flow of electricity to the vehicle (12) in dependence upon the energy storage device parameters for the auxiliary energy storage device (32) and the primary energy storage device (24).

5. The system (10) of any preceding claim, further comprising:
at least one bi-directional DC-DC boost converter (46) that is configured to control the flow of electrical power from the auxiliary energy storage device (32) to the primary energy storage device (24).

6. The system (10) of any preceding claim, wherein:
a nominal voltage of the auxiliary energy storage device (32) is within a threshold voltage of the primary energy storage device (24).

7. The system (10) of any preceding claim, wherein:
the remote opportunity charging device (14) is configured to provide supplemental power to an auxiliary device of the vehicle (12).

8. The system (10) of any preceding claim, wherein:
the interface (16) comprises a plurality of spring-loaded, sliding electrical contacts (40).

9. The system (10) of any preceding claim, wherein:
the remote opportunity charging device (14) includes a housing and an auxiliary energy storage device (32) in the housing for charging the primary energy storage device (24) of the vehicle (12), wherein the remote opportunity charging device (14) is configured to move along with the vehicle (12) during vehicle operation and to charge the primary energy storage device (24) of the vehicle (12) without the remote opportunity charging device (14) being tethered to off-board the vehicle (12);
the interface (16) is configured to provide a communication link between the remote opportunity charging device (14) and the vehicle (12), the communication link being configured for the communication of energy storage device parameters between the vehicle (12) and the remote opportunity charging device (14), the energy storage device parameters relating to at least one of the auxiliary energy storage device (32) or the primary energy storage device (24); and
the system (10) further comprises a controller (38) configured to control the charging of the primary energy storage device (24) by the remote opportunity charging device (14) in dependence upon the energy storage device parameters.

10. An apparatus, comprising:
a housing;
a control unit within the housing, the control unit being configured to establish a communication link with a vehicle; and
an auxiliary energy storage device within the housing, the auxiliary energy storage device being configured to selectively transfer electrical power to a primary energy storage device on-board the vehicle during operation of the vehicle to charge the primary energy storage device;
wherein the apparatus is configured for removable attachment to the vehicle.

11. A method, comprising the steps of:
removably connecting a remote opportunity charging device (14) to a vehicle (12);
establishing a communication link between the remote opportunity charging device (14) and the vehicle (12); and
selectively transferring electrical power from an auxiliary energy storage device (32) of the remote opportunity charging device (14) to a primary energy storage device (24) on-board the vehicle (12).

12. The method according to claim 11, further comprising the step of:
over the communication link, communicating at least one parameter of the auxiliary energy storage device (32) to the vehicle (12), the at least one parameter including at least one of a type, chemistry, charge profile, or a state of charge of the auxiliary energy storage device (32).

13. The method according to claim 11 or claim 12, wherein:
the electrical power is transferred from the auxiliary energy storage device (32) to the primary energy storage device (24) in dependence upon the at least one parameter.

14. The method according to any of claims 11 to 13, further comprising the step of:
selectively transferring the electrical power from the auxiliary energy storage device (32) of the remote opportunity charging device (14) to an auxiliary device of the vehicle (12).

15. The method according to any of claims 11 to 14, wherein:
the step of removably connecting the remote opportunity charging device (14) includes establishing an electrical connection between the auxiliary energy storage device (32) and the primary energy storage device (24), wherein the electrical connection is provided by a plurality of spring-loaded, sliding electrical contacts (40).
